# EUROPEAN PATENT APPLICATION

(11) **EP 4 442 456 A1**
(43) Date of publication of application: **09.10.2024**
(21) Application number: 22900872.7
(22) Date of filing: 14.09.2022
(51) Int. Cl.: B32B 25/10, B29C 70/34, B29C 70/68, B32B 27/04, B29K 21/00, B29K 105/08

(54) **COMPOSITE MATERIAL AND METHOD FOR PRODUCING COMPOSITE MATERIAL**

(30) Priority: 01.12.2021 JP 2021195147
(71) Applicant: Fujikura Composites Inc., Koto-ku Tokyo 135-0063 (JP)
(72) Inventor: NAKA, Takuya, Saitama-shi, Saitama 339-8510 (JP); KOGAWA, Yoshihito, Saitama-shi, Saitama 339-8510 (JP); KIMOTO, Naoki, Saitama-shi, Saitama 339-8510 (JP)
(74) Representative: Zacco GmbH
(86) International application number: PCT/JP2022/034301
(87) International publication number: WO 2023/100437

(57) **Abstract**

Provided is a composite material of a fiber reinforced plastic and a rubber material in which peeling between the fiber reinforced plastic and the rubber material is prevented.

A composite material, including: a first member containing a fiber reinforced plastic; and a second member containing a rubber material and formed to be in direct contact with the first member within at least a part of a region on the first member, wherein the first member and the second member are integrated.

## Description

### Technical Field

The present invention relates to a composite material containing a fiber reinforced plastic and a rubber material, and a method for manufacturing the composite material.

### Background Art

Since fiber reinforced plastic (FRP) has both a lightweight property and high strength, it is currently widely used as a material for industrial products such as: transportation-related devices such as aircraft, automobiles, and bicycles; sporting goods such as tennis rackets and golf clubs; and building structures such as aseismatic reinforcement materials. For the industrial products, not only the lightweight property and the high strength but also aesthetic appearance may be required. Accordingly, a composite material in which a member having aesthetic appearance adheres to the fiber reinforced plastic may be used as the material having the lightweight property, the high strength, and the aesthetic appearance.

As the composite material having the lightweight property, the high strength, and the aesthetic appearance, conventionally proposed is a composite material wherein two members of a first member composed of a fiber reinforced plastic and a decorating material are integrated, a thermoplastic resin layer is formed at a bonding part between the first member and the decorative material, and the thermoplastic resin layer covers a reinforcing fiber being a part of the reinforcing fiber group of the first member (Patent Literature 1). As the decorative material, Patent Literature 1 proposes a plastic film, a metal plate, textile, cloth, nonwoven fibric, artificial leather, and the like.

In Patent Literature 1, the thermoplastic resin layer interposed between the fiber reinforced plastic and the decorative material functions as an adhesive layer and covers a part of the reinforcing fiber of the fiber reinforced plastic, and thereby excellent adhesive strength is imparted to the composite material between the fiber reinforced plastic and the decorative material.

Meanwhile, the material using the fiber reinforced plastic may be required to have not only the lightweight property and the high strength but also a vibration-attenuating property and deformation resistance. Accordingly, a composite material in which a rubber material adheres to a fiber reinforced plastic using an adhesive may be used as the material having the lightweight property, the high strength, the vibration-attenuating property, and the deformation resistance.

However, the composite material in which the rubber material adheres to the fiber reinforced plastic using the adhesive generates unevenness of an applying state of the adhesive to fail to obtain sufficient adhesiveness between the fiber reinforced plastic and the rubber material, and therefore has room for improvement of the adhesive strength between the fiber reinforced plastic and the rubber material. A method for manufacturing the composite material in which the adhesive is applied on the fiber reinforced plastic to adhere the rubber material requires a step of applying the adhesive and thereby has complication of manufacturing steps. In addition, it is difficult to uniformly apply the adhesive, and therefore there is a problem of impossibility of simplifying the manufacturing.

### Document List

### Patent Literature

Patent Literature 1: Japanese Patent Laid-Open No. 2006-44264

### Summary of Invention

### Technical Problem

In view of the above circumstance, it is an object of the present invention to provide: a composite material of a fiber reinforced plastic and a rubber material in which peeling between the fiber reinforced plastic and the rubber material is prevented; and a method for manufacturing a composite material of the fiber reinforced plastic and the rubber material in which complication of the manufacturing steps can be prevented and easy manufacturing is achieved.

### Solution to Problem

A summary of configurations of the present invention is as follows.
[1] A composite material, comprising: a first member containing a fiber reinforced plastic; and a second member containing a rubber material and formed to be in direct contact with the first member within at least a part of a region on the first member, wherein the first member and the second member are integrated.
[2] The composite material according to [1], wherein the first member and the second member are in direct contact, and an adhesive member is not interposed between the first member and the second member.
[3] The composite material according to [1] or [2], wherein the first member and the second member are sheet-like, and the composite material has a laminate structure.
[4] The composite material according to [1] or [2], wherein the rubber material is at least one selected from the group consisting of nitrile rubber, fluorine rubber, butyl rubber, ethylene-propylene-diene rubber, hydrogenated nitrile rubber, and silicone rubber.
[5] The composite material according to [1] or [2], wherein the rubber material is at least one selected from the group consisting of nitrile rubber, fluorine rubber, and butyl rubber.
[6] The composite material according to [1] or [2], wherein the fiber reinforced plastic is a carbon-fiber reinforced plastic.
[7] The composite material according to [1] or [2], wherein the first member is a multilayer structure having: a first one of the fiber reinforced plastic that forms a first layer in which a fiber orientation angle is a first direction; and a second one of the fiber reinforced plastic that forms a second layer in which a fiber orientation angle is a second direction different from the first direction.
[8] The composite material according to [1] or [2], wherein an outer surface of the composite material is of the first member.
[9] The composite material according to [1] or [2], wherein an outer surface of the composite material is of the second member.
[10] The composite material according to [1] or [2], wherein the composite material is formed in a plate shape or a cylindrical shape.
[11] A method for manufacturing a composite material, the method comprising:
   a step of providing a first precursor being an uncured or semi-cured material in which a fiber is impregnated with a resin;
   a step of directly laminating a second precursor containing an unvulcanized rubber onto at least a part of a region on the provided first precursor to obtain a laminate of the first precursor and the second precursor; and
   an integrating step of heat-treating the obtained laminate to obtain a first member containing a fiber reinforced plastic by thermally curing the resin of the first precursor and obtain a second member containing a rubber material by vulcanizing the unvulcanized rubber of the second precursor, and integrating the first member and the second member.
[12] The method for manufacturing a composite material according to [11], wherein the second precursor containing an unvulcanized rubber blended with a vulcanizer is directly laminated onto the provided first precursor without interposing an adhesive member.

### Effects of Invention

According to an aspect of the composite material of the present invention, a composite material of a fiber reinforced plastic and a rubber material can be obtained, the composite material comprising: a first member containing a fiber reinforced plastic; and a second member containing a rubber material and formed to be in direct contact with the first member within at least a part of a region on the first member, wherein the first member and the second member are integrated and in which peeling between the first member containing the fiber reinforced plastic and the second member containing the rubber material is prevented.

According to an aspect of the composite material of the present invention, the first member and the second member are in direct contact, and an adhesive member is not interposed between the first member and the second member, and adhesion unevenness due to the adhesive member is prevented, resulting in preventing the peeling between the first member and the second member.

According to an aspect of the composite material of the present invention, the rubber material is at least one selected from the group consisting of nitrile rubber, fluorine rubber, butyl rubber, ethylene-propylene-diene rubber, hydrogenated nitrile rubber, and silicone rubber, and thereby tightness between the first member and the second member is obtained, and the peeling can be further prevented.

According to an aspect of the composite material of the present invention, the rubber material is at least one selected from the group consisting of nitrile rubber, fluorine rubber, and butyl rubber, and thereby tightness between the first member and the second member is certainly obtained, and the peeling is further certainly prevented.

In an aspect of the method for manufacturing a composite material of the present invention, a second precursor containing an unvulcanized rubber is directly laminated to at least a part of a region on the first precursor being an uncured or semi-cured material of a fiber impregnated with a resin to obtain a laminate, and the laminated is heat-treated to obtain a first member containing a fiber reinforced plastic by thermally curing the resin of the first precursor and obtain a second member containing a rubber material by vulcanizing the unvulcanized rubber of the second precursor, and the first member and the second member are integrated. That is, the laminate is heat-treated for the prepreg being the uncured or semi-cured material in which the fiber is impregnated with the resin to be subjected to the thermally curing treatment, and for the unvulcanized rubber to be vulcanized to simultaneously obtain the fiber reinforced plastic and the vulcanized rubber material, and to integrate the obtained fiber reinforced plastic and the vulcanized rubber material.

Therefore, according to an aspect of the method for manufacturing a composite material of the present invention, a step itself of applying an adhesive is not required, and uniformly applying an adhesive is also not required for integrating the first member containing the fiber reinforced plastic and the second member containing the rubber material. Accordingly, according to the aspect of the manufacturing method of the present invention, complication of manufacturing steps of the composite material of the fiber reinforced plastic and the rubber material can be prevented, and manufacturing of the composite material can be simplified. According to an aspect of the method for manufacturing a composite material of the present invention, the laminate is heat-treated to obtain a first member containing the fiber reinforced plastic by thermally curing the resin of the first precursor and obtain a second member containing the rubber material by vulcanizing the unvulcanized rubber of the second precursor, and the first member and the second member are integrated, which consequently yields the composite material of the fiber reinforced plastic and the rubber material in which peeling between the first member containing the fiber reinforced plastic and the second member containing the rubber material is prevented.

According to an aspect of the method for manufacturing a composite material of the present invention, the second precursor containing the unvulcanized rubber is directly laminated onto the first precursor without interposing an adhesive member to prevent adhesion unevenness due to the adhesive member, and therefore peeling between the first member and the second member can be prevented.

### Brief Description of Drawings

[FIG. 1] An explanatory view illustrating an outline of an example of an embodiment of a composite material of the present invention.
[FIG. 2] An explanatory view illustrating an aspect of a composite material of the present invention having an outer surface being of a first member, the composite material being disassembled.
[FIG. 3] An explanatory view illustrating an aspect of a composite material of the present invention having an outer surface being of a second member, the composite material being disassembled.

### Description of Embodiments

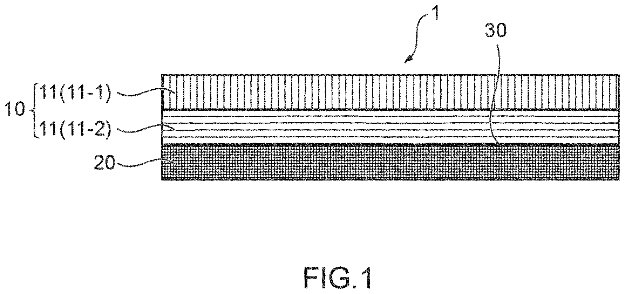

Hereinafter, details of a composite material of the present invention will be described. FIG. 1 is an explanatory view illustrating an outline of an example of an embodiment of a composite material of the present invention. A composite material 1 of the present invention is a composite material of a fiber reinforced plastic and a rubber material, the composite material comprising: a first member 10 containing a fiber reinforced plastic; and a second member 20 containing a rubber material and formed to be in direct contact with the first member 10 within at least a part of a region on the first member 10, in which the first member 10 and the second member 20 are integrated. In the composite material 1 of the present invention, the first member 10 adheres to the second member 20 to form a bonding part 30 where the first member 10 is bonded to the second member 20, and the first member 10 and the second member 20 are integrated. The composite material 1 of the present invention is integrated in a state where at least a part of a region on the first member 10 is in direct contact with the second member 20.

As illustrated in FIG. 1, in the composite material 1 according to an example of an embodiment of the present invention, an adhesive member such as an adhesive is not interposed between the first member 10 and the second member 20 in the bonding part 30 where the first member 10 and the second member 20 are in direct contact. In the composite material 1 of the present invention, at least a part of a region on the first member 10 is integrated with the second member 20 in a state of directly contacting with the second member 20, and at least a part of a region on the second member 20 is integrated with the first member 10 in a state of directly contacting with the first member 10.

In the composite material 1 according to the example of the embodiment of the present invention, a substantially entire surface of the first member 10 opposite to the second member 20 is integrated with the second member 20 in a state of directly contacting with the second member 20. In addition, a substantially entire surface of the second member 20 opposite to the first member 10 is integrated with the first member 10 in a state of directly contacting with the first member 10. Therefore, in the composite material 1, an adhesive member is not interposed over an entirety of the bonding part 30 where the first member 10 and the second member 20 are opposite to each other.

In the composite material 1, a surface portion of the fiber reinforced plastic constituting the first member 10 and a part of a matrix in a proximity of the surface portion enter a surface portion of the rubber material constituting the second member 20 and a proximity of the surface portion, and the surface portion of the rubber material constituting the second member 20 and a part of the proximity of the surface portion enter the surface portion of the fiber reinforced plastic constituting the first member 10 and the proximity of the surface portion. Thus, the first member 10 is bonded to the second member 20 to form the bonding part 30, and the first member 10 and the second member 20 are integrated. That is, in the bonding part 30 in the composite material 1, the first member 10 exhibits an anchor effect relative to the second member 20, the second member 20 exhibits an anchor effect relative to the first member 10, and therefore the first member 10 and the second member 20 are integrated.

A shape of the composite material 1 according to an example of an embodiment of the present invention is not particularly limited. In the composite material 1 in FIG. 1, the first member 10 and the second member 20 have a sheet shape, and the composite material 1 has a sheet-shaped laminate structure.

When the first member 10 and the second member 20 have both the sheet shape, a thickness of the first member 10 is not particularly limited, and examples thereof include 0.05 mm or more and 10 mm or less, and more specifically 0.10 mm or more and 5.0 mm or less. A thickness of the second member 20 is not particularly limited, and may be same as or different from the thickness of the first member 10. Examples of the thickness of the second member 20 include 0.05 mm or more and 10 mm or less, and more specifically 0.10 mm or more and 5.0 mm or less.

The composite material 1 is a composite material of the fiber reinforced plastic and the rubber material, which has the first member 10 containing the fiber reinforced plastic and the second member 20 containing the rubber material and in direct contact with the first member 10 in at least a part of a region on the surface of the first member 10, and in which the first member 10 and the second member 20 are integrated by the above anchor effect to prevent peeling between the first member 10 containing the fiber reinforced plastic and the second member 20 containing the rubber member. In the composite material 1 illustrated in FIG. 1, the first member 10 and the second member 20 are in direct contact over an entirety of the bonding part 30, and an adhesive member is not interposed between the first member 10 and the second member 20. Thus, adhesion unevenness due to the adhesive member and nonuniform bonding strength in the bonding part are prevented, and thereby peeling between the first member 10 and the second member 20 is prevented.

Examples of the fiber reinforced plastic constituting the first member 10 include carbon-fiber reinforced plastic (CFRP), glass-fiber reinforced plastic (GFRP), aramid-fiber reinforced plastic (AFRP), and cellulose-fiber reinforced plastic. Among these, the carbon-fiber reinforced plastic is preferable in terms of the lightweight property, the high strength, and rigidity. As for a matrix resin of the fiber reinforced plastic, the resin component is not particularly limited. Specific examples of the resin component include thermosetting resins such as an epoxy resin, a phenol resin, a cyanate resin, a vinyl ester resin, and an unsaturated polyester resin, and an epoxy resin is particularly preferable. The fiber reinforced plastic constituting the first member 10 is a thermally cured member of an uncured (or semi-cured) thermally curable prepreg, which is an intermediate material of fiber impregnated with the matrix resin, by a heating treatment and the like.

In the composite material 1 according to the example of the embodiment of the present invention, the first member 10 is a multilayer structure having: a first fiber reinforced plastic layer 11 (11-1) in which a fiber orientation angle is a first direction; and a second fiber reinforced plastic layer 11 (11-2) in which a fiber orientation angle is a second direction different from the first direction. The first member 10 is a structure of the fiber reinforced plastic with a plurality of the layers such that the fiber orientation angles are different, and thereby strength in the entire surface direction of the first member 10 is improved. Although the first member 10 in FIG. 1 is a multilayer structure composed of two fiber reinforced plastic layers 11 for convenience of description, the first member 10 may be a multilayer structure having three or more fiber reinforced plastic layers 11. In a case of the multilayer structure having three or more fiber reinforced plastic layers 11, fiber reinforced plastic layers 11 having different fiber orientation angles from each other, such as a third fiber reinforced plastic layer 11 in which a fiber orientation angle is a third direction different from the first direction and the second direction, and a fourth fiber reinforced plastic layer 11 in which a fiber orientation angle is a fourth direction different from the first direction, the second direction, and the third direction, may be provided. In addition, the first member 10 may be a structure composed of one fiber reinforced plastic layer 11.

Examples of the rubber material constituting the second member 20 include nitrile rubber (NBR) such as acrylonitrile-butadiene rubber, fluorine rubber (FKM), butyl rubber (IIR), ethylene-propylene-diene rubber (EPDM), hydrogenated nitrile rubber (HNBR), silicone rubber, urethane rubber, acryl rubber (ACM), isoprene rubber (IR), styrene rubber (SBR), butadiene rubber (BR), ethylene-propylene rubber (EPM), chloroprene rubber (CR), chlorinated polyethylene rubber, and natural rubber (NR). These rubber materials may be used singly, or may be used in combination of two or more. The rubber material constituting the second member 20 is a vulcanized member of an unvulcanized rubber by a heating treatment and the like.

Among these rubber materials, nitrile rubber, fluorine rubber, butyl rubber, ethylene-propylene-diene rubber, hydrogenated nitrile rubber, and silicone rubber are preferable in terms of obtaining tightness between the first member 10 and the second member 20 and preventing the peeling, and nitrile rubber, fluorine rubber, and butyl rubber are particularly preferable in terms of certainly obtaining the tightness between the first member 10 and the second member 20 and certainly preventing the peeling.

Into the second member 20, a vulcanizer is blended in addition to the rubber material. Additives such as an antiaging agent, a processing auxiliary, a thickener, a vulcanization-accelerating auxiliary, a filler, a plasticizer, and a vulcanization accelerator may be blended as necessary.

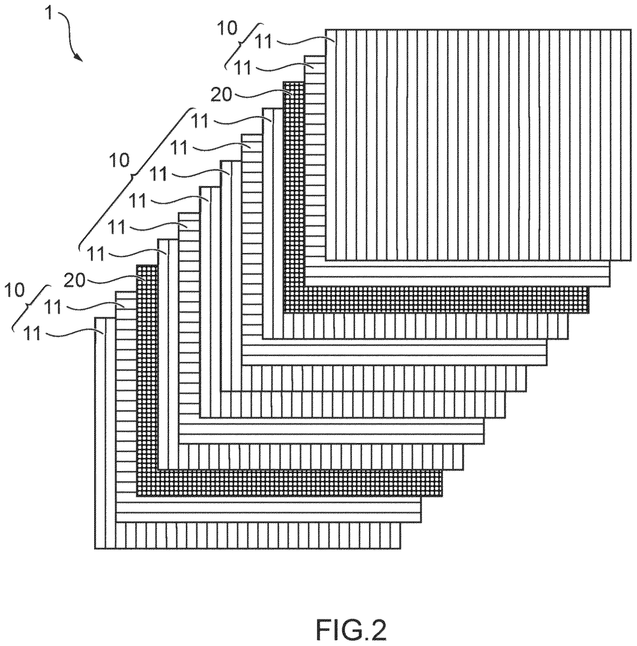

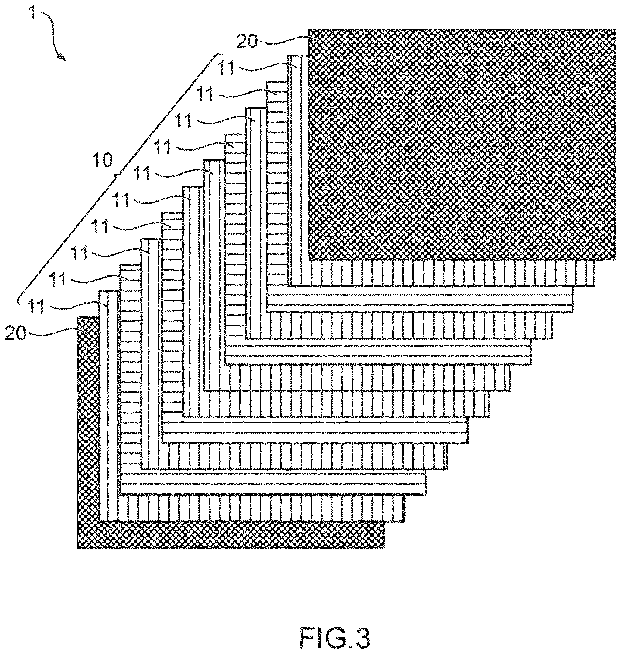

Next, the laminated structure of the first member 10 and the second member 20 in the composite material 1 according to an example of an embodiment of the present invention will be described. FIG. 2 is an explanatory view illustrating an aspect of a composite material of the present invention having an outer surface being of the first member, the composite material being disassembled. FIG. 3 is an explanatory view illustrating an aspect of a composite material of the present invention having an outer surface being of the second member, the composite material being disassembled. In FIGs. 2 and 3, for describing the laminated structure of the first member 10 and the second member 20 in the composite material 1, the laminated structure composed of layers of the first member 10 and layers of the second member 20 are disassembled to each layer.

As illustrated in FIG. 2, the composite material 1 may have the laminated structure in which the outer surface of the composite material 1 is of the first member 10. In FIG. 2, both the outer surfaces to form a main surface of the sheet-shaped composite material 1 are of the first member 10 containing the fiber reinforced plastic. Therefore, the layer of the second member 20 containing the rubber material has a state of being interposed between the layers of the first member 10 containing the fiber reinforced plastic. In FIG. 2, two layers of the second member 20 containing the rubber material are provided, and the layer of the first member 10 composed of six fiber reinforced plastic layers 11 is interposed between the layer of the second member 20 and the layer of the second member 20. On each surface of the layers of the second member 20, the layer of the first member 10 composed of two fiber reinforced plastic layers 11 is each provided. In FIG. 2, the number of layers of the first member 10, the number of the fiber reinforced plastic layers 11, and the number of layers of the second member 20 are numbers of layers for convenience of description, and the number of layers of the first member 10, the number of the fiber reinforced plastic layers 11, and the number of layers of the second member 20 may be appropriately selected according to use conditions and the like of the composite material 1.

In the composite material 1 having the laminated structure in which the outer surface of the composite material 1 is of the first member 10 and the layer of the second member 20 containing the rubber material is interposed between the layers of the first member 10, a deformation amount until breakage due to bending and the like becomes large, and deformation resistance of the composite material 1 is improved. In the composite material 1 having the laminated structure in which the outer surface of the composite material 1 is of the first member 10 and the layer of the second member 20 is interposed between the layers of the first member 10, the vibration-attenuating property is improved.

As illustrated in FIG. 3, the composite material 1 may have a laminated structure in which the outer surface of the composite material 1 is of the second member 20. In FIG. 3, both the outer surfaces to form the main surface of the sheet-shaped composite material 1 are of the second member 20 containing the rubber material. Therefore, the layer of the first member 10 containing the fiber reinforced plastic has a state of being interposed between the layers of the second member 20 containing the rubber material. In FIG. 3, two layers of the second member 20 containing the rubber material are provided, and the layer of the first member 10 composed of ten fiber reinforced plastic layers 11 is interposed between the layer of the second member 20 and the layer of the second member 20. In FIG. 3, the number of layers of the first member 10, the number of the fiber reinforced plastic layers 11, and the number of layers of the second member 20 are numbers of layers for convenience of description, and the number of layers of the first member 10, the number of the fiber reinforced plastic layers 11, and the number of layers of the second member 20 may be appropriately selected according to use conditions and the like of the composite material 1. In addition, the layer of the second member 20 may be further interposed, other than the second member 20 to form the outer surface of the composite material 1, between the layers of the first member 10.

In the composite material 1 having the laminated structure in which the outer surface of the composite material 1 is of the second member 20 and the layer of the first member 10 containing the fiber reinforced plastic is interposed between the layers of the second member 20, scattering of the fiber of the first member 10 if the composite material 1 breaks can be prevented, and thus safety of the composite material 1 if breaking is improved. In addition, the outer surface of the composite material 1 being of the second member 20 containing the rubber material can impart effects derived from the rubber material, such as, for example, oil resistance, weather resistance, durability, chemical resistance, and ozone resistance, to the composite material 1. In the composite material 1 having the laminated structure in which the outer surface of the composite material 1 is of the second member 20 and the layer of the first member 10 is interposed between the layers of the second member 20, the vibration-attenuating property is improved.

The composite material 1 can be formed into a desired shape such as a plate or a cylinder for use according to use such as transportation-related devices, sports goods, and building structures.

Next, a method for manufacturing a composite material of the present invention will be described. The method for manufacturing a composite material comprises: (1) a step of providing a first precursor being an uncured or semi-cured material in which a fiber is impregnated with a resin; (2) a step of directly laminating a second precursor containing an unvulcanized rubber onto at least a part of a region on the provided first precursor to obtain a laminate of the first precursor and the second precursor; and (3) an integrating step of heat-treating the obtained laminate to obtain a first member containing a fiber reinforced plastic by thermally curing the resin of the first precursor and obtain a second member containing a rubber material by vulcanizing the unvulcanized rubber of the second precursor, and integrating the first member and the second member.

### (1) Step of providing first precursor being uncured or semi-cured material in which fiber is impregnated with resin

This step is providing a prepreg being an uncured or semi-cured material in which a reinforced fiber such as carbon fiber is impregnated with a resin such as a thermosetting resin. As the first precursor, a single-layer prepreg may be used, or a laminated prepreg in which a plurality of layers of the prepreg is laminated may be used. The number of laminated layers of the prepreg may be appropriately selected according to the use conditions and the like of the composite material.

### (2) Step of directly laminating second precursor containing unvulcanized rubber onto first precursor to obtain laminate

This step is laminating a second precursor containing an unvulcanized rubber blended with a vulcanizer onto a (laminated) prepreg surface being the first precursor. In this step, the second precursor containing the unvulcanized rubber is directly laminated onto the first precursor without interposing an adhesive member. For laminating the second precursor onto the first precursor, pressing the laminate of the first precursor and the second precursor may be performed, for example, as necessary.

### (3) Integrating step

In the integrating step, the laminate of the first precursor and the second precursor is heat-treated to obtain the first member containing the fiber reinforced plastic by thermally curing the resin of the first precursor to form the fiber reinforced plastic from the prepreg and obtain the second member containing the rubber material by vulcanizing the unvulcanized rubber of the second precursor, and the first member and the second member are integrated. That is, in the integrating step, the laminate of the first precursor and the second precursor is heat-treated for thermally treating the prepreg being the uncured or semi-cured material of the fiber impregnated with the resin and for vulcanizing the unvulcanized rubber to simultaneously obtain the fiber reinforced plastic and the vulcanized rubber material, and the obtained fiber reinforced plastic and vulcanized rubber material are integrated. In forming the fiber reinforced plastic from the prepreg, a part of the resin constituting the first precursor enters the unvulcanized rubber constituting the second precursor. In addition, in vulcanizing the unvulcanized rubber to form the rubber material, a part of the unvulcanized rubber constituting the second precursor enters the resin constituting the first precursor. By the aforementioned interaction between the first precursor and the second precursor, the first member and the second member are bonded to form the bonding part, and the first member and the second member are integrated. As a result, formed is the bonding part where a surface portion of the fiber reinforced plastic constituting the first member and a part of a matrix resin in a proximity of the surface portion enter a surface portion of the rubber material constituting the second member and a proximity of the surface portion, and the surface portion of the rubber material constituting the second member and a part of the proximity of the surface portion enter the surface portion of the fiber reinforced plastic constituting the first member and the proximity of the surface portion.

As the method for heat-treating the laminate of the first precursor and the second precursor, a heat-treating condition suitable for the first precursor can be appropriately selected.

According to the method for manufacturing a composite material of the present invention, a step itself of applying an adhesive is not required, and therefore uniformly applying an adhesive is also not required for integrating the first member containing the fiber reinforced plastic and the second member containing the rubber material. Accordingly, complication of the manufacturing steps of the composite material of the fiber reinforced plastic and the rubber material can be prevented, and manufacturing of the composite material can be simplified. In addition, in the method for manufacturing a composite material of the present invention, the laminate of the first precursor and the second precursor is heat-treated to obtain the first member containing the fiber reinforced plastic by thermally curing the resin of the first precursor, and to obtain the second member containing the rubber material by vulcanizing the unvulcanized rubber of the second precursor, and the first member and the second member can be integrated, and therefore the composite material of the fiber reinforced plastic and the rubber material in which the peeling between the first member containing the fiber reinforced plastic and the second member containing the rubber material is prevented can be obtained.

In the method for manufacturing a composite material of the present invention, the unvulcanized rubber is directly laminated onto the first precursor without interposing an adhesive member. Thus, adhesion unevenness due to the adhesive member can be prevented, and thereby the peeling between the first member and the second member can be prevented.

### Embodiments

Next, Examples of the composite material of the present invention will be described, but the composite material of the present invention is not limited to the following Embodiments.

### Embodiments 1 to 3

An unvulcanized rubber and a vulcanizer were blended at a blending ratio in the following Table 1, and then mixed to prepare a second precursor being a precursor of a second member to be used in Embodiment 1 to 3. As the unvulcanized rubber, nitrile rubber (Embodiment 1), fluorine rubber (Embodiment 2), and butyl rubber (Embodiment 3) were used.

Although not described in the following Table 1, additives (an antiaging agent, a processing auxiliary, a thickener, a vulcanization-accelerating auxiliary, a filler, a plasticizer, a vulcanization accelerator, and the like) were appropriately blended.

A first precursor (precursor of a first member) to be used in Embodiments 1 to 3 was as follows.
▪ P2255S-15: prepreg sheet having sheet thickness of 0.122 mm, amount of resin of 24.0 mass%, amount of carbon fiber of 76.0%, manufactured by Toray Industries, Inc.

Evaluation points were as follows.

### (1) Peeling Test

The prepregs of the first precursor were laminated with a laminated structure of (0°/90°)₅ to form a sheet of a laminated prepreg with 1.22 mm. Then, the obtained laminate was placed in a sheet-pressing machine, and heat-treated under conditions at 8 Kgf/cm² at 150°C for 60 minutes to prepare a test sample of a composite material in which the first member and the second member were integrated. The obtained test sample was subjected to a peeling test in which the second member is peeled from the composite material of the integrated first member and the second member. The peeling test was performed at a test speed of 50 mm/min in accordance with JIS K 6854 to measure a maximum load (unit: N) for peeling the second member from the composite material. The number of the peeling test was five, and evaluated was a peeling prevention property between the fiber reinforced plastic and the rubber material at the maximum load with its average value. A maximum load of 100 N or more was judged as "Passed" as a composite material having an excellent peeling prevention property between the fiber reinforced plastic and the rubber material.

### (2) Surface Observation

For the test sample after the peeling test, a surface on a bonding part side of the first member and a surface on the bonding part side of the second member were observed with an optical microscope (magnification: 100 times) to evaluate an integrating property between the fiber reinforced plastic and the rubber material on the following criteria.

Good: Many fragments of the rubber material adhered onto the surface on the bonding part side of the first member, and much carbon fiber and matrix resin adhered onto the surface on the bonding part side of the second member, and therefore the first member and the second member were strongly integrated by an anchor effect.

Fair: A slight amount of fragments of the rubber material adhered onto the surface on the bonding part side of the first member, and a slight amount of carbon fiber and matrix resin adhered onto the surface on the bonding part side of the second member, and therefore the first member and the second member were integrated by an anchor effect.

Poor: A fragment of the rubber material completely did not adhere onto the surface on the bonding part side of the first member, and/or the carbon fiber and the matrix resin completely did not adhere onto the surface on the bonding part side of the second member, and therefore the first member and the second member were not bonded by an anchor effect.

### The following Table 1 shows the evaluation results.

**[Table 1]**

| | | | Embodiment 1 | Embodiment 2 | | Embodiment 3 |
|---|---|---|---|---|---|---|
| Second precursor | Unvulcanized rubber | Nitrile rubber | 100 | 0 | 0 | |
| | | Fluorine rubber | 0 | 100 | 0 | |
| | | Butyl rubber | 0 | 0 | 100 | |
| | Vulcanizer | Precipitated sulfur | 1 | 1 | 1 | |
| First precursor | Prepreg of carbon fiber and thermosetting resin (P2255S-15) | | | | | |
| Evaluation results | Peeling test (N) (n=5) | | Passed | Passed | Passed | |
| | Surface observation | | Good | Good | Good | |

As shown in Table 1, in Embodiments 1 to 3, in which the laminate of the first precursor and the second precursor were heat-treated for thermally curing the prepreg and for vulcanizing the unvulcanized rubber to simultaneously obtain the fiber reinforced plastic and the vulcanized rubber material and in which the fiber reinforced plastic and the vulcanized rubber material were integrated, the maximum load for peeling the second member from the composite material was 100 N or more, and the first member and the second member were strongly integrated by the anchor effect. Therefore, in Embodiments 1 to 3, the composite material in which the peeling between the fiber reinforced plastic and the rubber material was prevented could be obtained.

### (3) Bending Test (Deformation Resistance)

Used as Embodiments were test samples of the composite material of the aforementioned Embodiments 1 to 3 in which the first member and the second member were integrated. For Comparative Embodiment 1, only a layer of the first member ((90°/0°)₅) was used as a test sample.

The bending test was performed in accordance with JIS K 7074 to measure a displacement until the test sample broke, and evaluated on the following criteria.
Good: Displacement of 5.00 mm or more
Fair: Displacement of 3.5 mm or more and less than 5.0 mm
Poor: Displacement of less than 3.5 mm

The following Table 2 shows the evaluation results.

**[Table 2]**

| | Embodiment 1 | Embodiment 2 | Embodiment 3 | Comparative Embodiment 1 |
|---|---|---|---|---|
| Bending test (deformation resistance) | Good | Good | Good | Poor |

As shown in Table 2, in Embodiments 1 to 3, in which the fiber reinforced plastic and the vulcanized rubber material were integrated, the displacement was large and the deformation resistance was excellent. Meanwhile, in Comparative Embodiment 1, in which the second member containing the rubber material was not formed, the displacement was small, and the deformation resistance failed to be obtained.

### Industrial Applicability

The composite material of the present invention prevents the peeling between the fiber reinforced plastic and the rubber material, and thus has high utility value as materials in the wide fields, such as transportation-related devices, sports goods, and building structures.

### List of Reference Signs

1 composite material
10 first member
11 fiber reinforced plastic layer
20 second member

## Claims

1. A composite material, comprising:
a first member containing a fiber reinforced plastic; and
a second member containing a rubber material and formed to be in direct contact with the first member within at least a part of a region on the first member,
wherein the first member and the second member are integrated.

2. The composite material according to claim 1, wherein the first member and the second member are in direct contact, and an adhesive member is not interposed between the first member and the second member.

3. The composite material according to claim 1 or 2, wherein the first member and the second member are sheet-like, and the composite material has a laminate structure.

4. The composite material according to claim 1 or 2, wherein the rubber material is at least one selected from the group consisting of nitrile rubber, fluorine rubber, butyl rubber, ethylene-propylene-diene rubber, hydrogenated nitrile rubber, and silicone rubber.

5. The composite material according to claim 1 or 2, wherein the rubber material is at least one selected from the group consisting of nitrile rubber, fluorine rubber, and butyl rubber.

6. The composite material according to claim 1 or 2, wherein the fiber reinforced plastic is a carbon-fiber reinforced plastic.

7. The composite material according to claim 1 or 2, wherein the first member is a multilayer structure having: a first one of the fiber reinforced plastic that forms a first layer in which a fiber orientation angle is a first direction; and a second one of the fiber reinforced plastic that forms a second layer in which a fiber orientation angle is a second direction different from the first direction.

8. The composite material according to claim 1 or 2, wherein an outer surface of the composite material is of the first member.

9. The composite material according to claim 1 or 2, wherein an outer surface of the composite material is of the second member.

10. The composite material according to claim 1 or 2, wherein the composite material is formed in a plate shape or a cylindrical shape.

11. A method for manufacturing a composite material, the method comprising:
a step of providing a first precursor being an uncured or semi-cured material in which a fiber is impregnated with a resin;
a step of directly laminating a second precursor containing an unvulcanized rubber onto at least a part of a region on the provided first precursor to obtain a laminate of the first precursor and the second precursor; and
an integrating step of heat-treating the obtained laminate to obtain a first member containing a fiber reinforced plastic by thermally curing the resin of the first precursor and obtain a second member containing a rubber material by vulcanizing the unvulcanized rubber of the second precursor, and integrating the first member and the second member.

12. The method for manufacturing a composite material according to claim 11, wherein the second precursor containing an unvulcanized rubber blended with a vulcanizer is directly laminated onto the provided first precursor without interposing an adhesive member.
